# EUROPÄISCHE PATENTANMELDUNG

(11) **EP 2 053 802 A1**
(43) Veröffentlichungstag der Anmeldung: **29.04.2009**
(21) Anmeldenummer: 08018428.6
(22) Anmeldetag: 22.10.2008
(51) Int. Cl.: H04L 12/56, H04L 29/06

(54) **Verfahren zum übertragen von modifizierten Datenrahmen in einem Kommunikationsnetz, Sende- und Empfangsvorrichtung für ein Kommunikationsnetz**

(30) Priorität: 23.10.2007 DE 102007050941
(71) Anmelder: Phoenix Contact GmbH & Co. KG, 32825 Blomberg (DE)
(72) Erfinder: Weiß, Dominik, 31855 Aerzen (DE)
(74) Vertreter: Bill, Burkart Hartmut

(57) **Zusammenfassung**

Erfindungsgemäß werden Daten mittels eines Datenrahmens in einem Kommunikationsnetz von wenigstens einem an das Kommunikationsnetz angeschlossenen Teilnehmer an wenigstens einen weiteren ebenfalls an das Kommunikationsnetz angeschlossenen Teilnehmer übertragen, wobei die Daten für eine Übertragung derart aufbereitet werden, dass eine Information zur Identifizierung bzw. Unterscheidung des jeweiligen Formats der Daten innerhalb eines Datenrahmens in ein Feld unmittelbar am Anfang eines Datenrahmens bzw. in ein einen Datenrahmen einleitendes Feld geschrieben wird.

## Beschreibung

Die Erfindung betrifft ein Verfahren zum Übertragen von Daten in einem Kommunikationsnetz gemäß dem Oberbegriff des Anspruchs 1, eine Sende- und Empfangsvorrichtung gemäß Anspruch 9 bzw. 10 sowie ein Kommunikationssystem gemäß Anspruch 11.

Derartige Verfahren, Vorrichtungen und Systeme sind bereits in zahlreichen Ausführungen bekannt und finden Einsatz in Kommunikationsnetzen, die einen Datenaustausch in Form von Datenrahmen zulassen. Ein Datenrahmen setzt sich dabei aus einer Anzahl von Feldern zusammen, die jeweils eine Anzahl von Bits bzw. Bytes beinhalten.

Beispielsweise findet der Datenaustausch in einem Kommunikationsnetz gemäß dem Ethernet-Standard in Form von Ethernet-Frames statt.

Auf dem Ethernet-Standard basierende Kommunikationsnetze werden mittlerweile auch im Bereich der automatisierten industriellen Fertigung eingesetzt und allgemein als Industrial Ethernet bezeichnet. Beispiele hierfür sind EtherCAT oder Profinet. Profinet erlaubt dabei innerhalb eines Ethernet-Frame, insbesondere innerhalb des Datenfeldes eines Ethernet-Frame, sowohl eine TCP/IP- bzw. UDP/IP-basierte Datenübertragung, wie sie in IT-Umgebungen üblich ist, als auch eine Echtzeit-Übertragung von Prozess- und/oder Diagnosedaten, bei der auf die IP-Adressierung und Flusssteuerungsmechanismen von TCP bzw. UDP verzichtet wird.

Beim Empfang bzw. Lesen eines Ethernet-Frame kann das jeweilige Format der Daten innerhalb des Datenfeldes anhand des Ethertype erkannt bzw. unterschieden werden, welcher in einem Ethertype-Feld unmittelbar vor dem Datenfeld übertragen wird. So lautet beispielsweise der Ethertype für IP-Daten "0x0800" (IP v4) während der Ethertype für Echzeit-Daten im Profinet "0x8892" lautet.

Um insbesondere bei immer weiter voranschreitenden Anforderungen an die Reaktionsschnelligkeit und Übertragungsgeschwindigkeit kürzeste Reaktions- und Latenzzeiten erreichen zu können, ist eine schnellstmögliche Unterscheidung der verschiedenartigen Rahmeninhalte notwendig.

In einem Ethernet-Frame beispielsweise, werden aber vor dem Ethertype-Feld, das diese Unterscheidung ermöglicht, erst mehrere andere Felder übertragen, die unter anderem der Adressierung dienen, wobei auf den Aufbau eines Ethernet-Frame bei der Beschreibung eines bevorzugten Ausführungsbeispiels gemäß der Erfindung noch detaillierter eingegangen wird.

Versuche ergaben, dass die im Ethernet-Standard bei der Übertragung vorgesehene Pause (Inter Frame Gap, IFG) zwischen zwei Ethernet-Frames nicht problemlos für die Übertragung einer zusätzlichen Steuerinformation für eine schnellstmögliche Unterscheidung genutzt werden kann. Bei Messungen der elektromagnetischen Verträglichkeit (EMV-Messungen) ist häufig ein deutlich verschlechtertes Verhalten gegenüber Störungen bei einer Verkürzung der Pause zwischen zwei Rahmen beobachtet worden.

Der Erfindung liegt daher die Aufgabe zugrunde, unter Vermeidung einer Verkürzung der Pause zwischen zwei aufeinanderfolgenden Datenrahmen sowie unter Vermeidung einer schlechteren elektromagnetischen Störfestigkeit, eine schnellere Unterscheidung verschiedenartiger Rahmeninhalte zu ermöglichen.

Die Aufgabe wird durch die Gegenstände mit den Merkmalen der jeweiligen unabhängigen Ansprüche gelöst.

Vorteilhafte und/oder bevorzugte Ausführungsformen und Weiterbildungen sind Gegenstand der abhängigen Ansprüche.

Erfindungsgemäß wird eine schnellere Unterscheidung von in einem Kommunikationsnetz übertragenen Datenrahmen mit verschiedenartigen Inhalten dadurch ermöglicht, dass eine Information zur Identifizierung des jeweiligen Rahmeninhalts, die bereits in einem anderen Feld innerhalb des Datenrahmens enthalten sein kann, an eine beim Empfang bzw. Lesen des Datenrahmens unmittelbar zugängliche Stelle gebracht wird.

Dazu sieht die Erfindung ein Verfahren zum Übertragen von Daten mittels wenigstens eines Datenrahmens in einem Kommunikationsnetz von wenigstens einem an das Kommunikationsnetz angeschlossenen Teilnehmer an wenigstens einen weiteren ebenfalls an das Kommunikationsnetz angeschlossenen Teilnehmer vor. Erfindungsgemäß werden dabei die Daten für eine Übertragung derart aufbereitet, dass eine der Identifizierung bzw. Unterscheidung des jeweiligen Formats der Daten innerhalb eines Datenrahmens dienende Steuerinformation in ein Feld unmittelbar am Anfang eines Datenrahmens bzw. in ein einen Datenrahmen einleitendes Feld eingefügt wird, welches eine Anzahl von Bits bzw. Bytes beinhaltet.

Ferner sieht die Erfindung dazu eine Sendevorrichtung zum Senden von Daten mittels wenigstens eines Datenrahmens in einem Kommunikationsnetz von wenigstens einem an das Kommunikationsnetzwerk angeschlossenen Teilnehmer an wenigstens einen weiteren ebenfalls an das Kommunikationsnetz angeschlossenen Teilnehmer vor. Diese insbesondere zum Einsatz bei dem erfindungsgemäßen Verfahren geeignete Sendevorrichtung zeichnet sich dadurch aus, dass sie ausgebildet ist, eine der Identifizierung bzw. Unterscheidung des jeweiligen Formats der Daten eines Datenrahmens dienende Steuerinformation in ein Feld unmittelbar am Anfang eines Datenrahmens bzw. in ein einen Datenrahmen einleitendes Feld, welches eine Anzahl von Bits bzw. Bytes beinhaltet, einzufügen.

Erfindungsgemäß ist darüber hinaus zum Empfangen von mittels wenigstens eines Datenrahmens in einem Kommunikationsnetz von wenigstens einem an das Kommunikationsnetzwerk angeschlossenen Teilnehmer gesendeten Daten eine Empfangsvorrichtung vorgesehen, die insbesondere zum Einsatz bei dem erfindungsgemäßen Verfahren geeignet ist und dazu ausgebildet ist, die verschiedenen Formate der Daten innerhalb eines Datenrahmens anhand einer der Identifizierung bzw. Unterscheidung des jeweiligen Datenformats dienenden Steuerinformation, die in einem Feld unmittelbar am Anfang eines Datenrahmens bzw. in einem einen Datenrahmen einleitenden Feld enthalten ist, zu erkennen bzw. zu unterscheiden, wobei dieses Feld eine Anzahl von Bits bzw. Bytes beinhaltet.

Ein aus wenigstens einer solchen Sendevorrichtung und wenigstens einer solchen Empfangsvorrichtung gebildetes Kommunikationssystem gibt schließlich ebenso das erfinderische Konzept wieder.

Die Erfindung bringt den Vorteil mit sich, in einem Kommunikationsnetz empfangende Datenrahmen jeweils ihrem Inhalt nach schnellstmöglich unterscheiden zu können und somit kürzeste Reaktions- und Latenzzeiten sicherzustellen.

Applikationsspezifisch wird dabei die erfindungsgemäße zusätzliche Steuerinformation beginnend an der Position des ersten oder einem der anderen Bytes eines Feldes unmittelbar am Anfang eines Datenrahmens bzw. eines einen Datenrahmen einleitenden Feldes eingefügt bzw. ausgelesen.

In einer bevorzugten Ausführungsform des erfindungsgemäßen Verfahrens ist die der Identifizierung bzw. Unterscheidung des jeweiligen Formats der Daten innerhalb eines Datenrahmens dienende Information bereits in einem anderen Feld des Datenrahmens als dem unmittelbar am Anfang eines Datenrahmens liegenden bzw. dem einen Datenrahmen einleitenden Feld enthalten.

In einer weiteren bevorzugten Ausführungsform des erfindungsgemäßen Verfahrens ist das Kommunikationsnetz gemäß dem Ethernet-Standard ausgeführt und der Datenrahmen weist entsprechend die Form eines Ethernet-Frame auf.

In einer besonders bevorzugten Ausführungsform des erfindungsgemäßen Verfahrens weist das Feld unmittelbar am Anfang eines Datenrahmens bzw. das einen Datenrahmen einleitende Feld die Position und Form einer als Präambel grundsätzlich nutzbaren oder dienenden Bitfolge auf. Dabei wird zumindest ein Teil des Inhalts der Präambel durch eine der Identifizierung bzw. Unterscheidung des jeweiligen Formats der Daten innerhalb eines Datenrahmens dienende Steuerinformation ersetzt. Während die Präambel eines Ethernet-Frame ursprünglich der Bit-Synchronisation der an einem Kommunikationsnetz angeschlossenen Teilnehmer diente, sind heutige, moderne Netzteilnehmer nicht mehr auf dieses Synchronisationsverfahren angewiesen, so dass die Präambel im Prinzip funktionslos ist, jedoch aus Konformitätsgründen weiterhin in jedem Ethernet-Frame enthalten bleibt. Durch die Nutzung zumindest eines Teils der Präambel für das erfindungsgemäße Einfügen einer der Identifizierung des Inhalts eines Ethernet-Frame dienenden Steuerinformation, kann die Form eines Ethernet-Frame ansonsten unverändert bleiben, so dass ein erfindungsgemäß angepasster Ethernet-Frame weiterhin für alle Netzteilnehmer lesbar bleibt.

Zweckmäßiger Weise ist bei dem erfindungsgemäßen Verfahren ferner vorgesehen, für das Einfügen einer zusätzlichen Steuerinformation während der Serialisierung/Deserialisierung (SerDes) im Zusammenhang mit einem Leitungscode bisher ungenutzte Code- bzw. Steuerwörter des Leitungscodes zu nutzen, die zuvor entsprechend umdefiniert wurden.

Insbesondere ist in einer weiteren Ausführungsform des erfindungsgemäßen Verfahrens die Verwendung des 8B/10B-Code als Leitungscode vorgesehen, wobei in praktischer Weise z.B. die bisher ungenutzten Codewörter "K28.0", "K28.2" und "K28.3" derart umdefiniert werden, dass sie der Steuerinformation "IT-Standard-Daten", "I/O-Daten" bzw. "Diagnose-Daten" entsprechen.

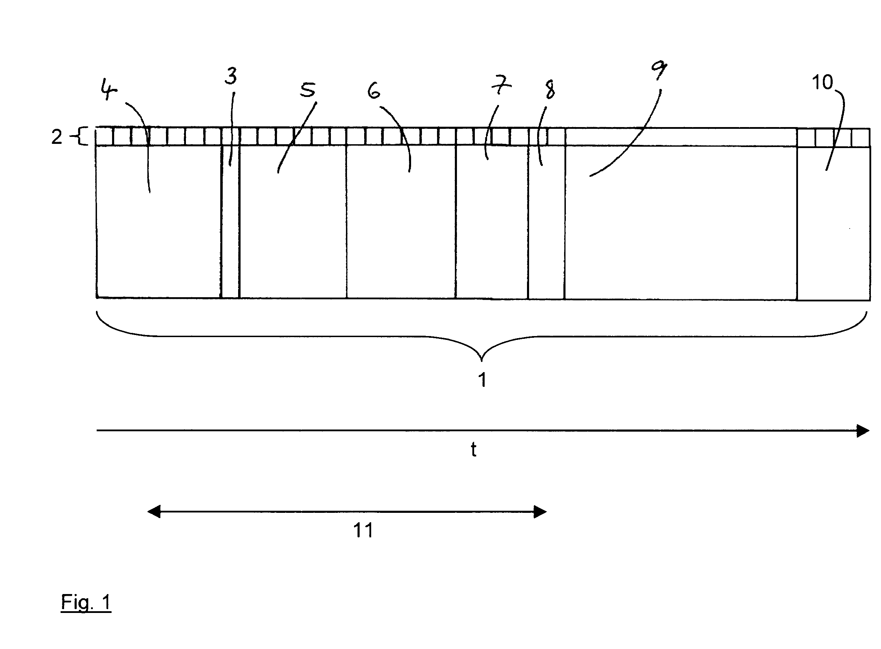

Die Erfindung wird nachfolgend anhand eines Ausführungsbeispiels im Zusammenhang mit der begleitenden Figur 1 näher erläutert. Es versteht sich dabei, dass die zeichnerische Darstellung lediglich als eine grob schematische Skizzierung der bei dem erfindungsgemäßen Verfahren benutzten Datenstrukturen zu betrachten ist.

Die Figur 1 zeigt den Aufbau eines bei der erfindungsgemäßen Übertragung in Kommunikationsnetzen verwendeten Ethernet-Frame. Es versteht sich, dass auch eine Mehrzahl von zeitlich nacheinander folgenden Ethernet-Frames umfasst sein können.

Wie aus der Figur 1 ersichtlich, setzt sich ein solcher Ethernet-Frame 1 aus mehreren verschiedenen Feldern 3, ..., 10 zusammen, die gemäß dem Pfeil t in der Figur zeitlich nacheinander übertragen werden und jeweils eine bestimmte Anzahl 2 an Bytes beinhalten. So beginnt der dargestellte Ethernet-Frame 1 mit einer Präambel 4, welcher ein Rahmenanfangs-Begrenzungssymbol 3 (Startframe Delimiter, SFD) folgt. Die Präambel 4 besteht aus 7 Bytes und das Rahmenanfangs-Begrenzungssymbol 3 weist die Länge eines Bytes auf. Innerhalb des Ethernet-Frame 1 folgen dann mit einer Länge von 6 Bytes ein Zieladressfeld 5, welches von einem Quelladressfeld 6 mit der gleichen Länge nachgefolgt wird.

An das Quelladressfeld 6 schließt sich ein Identifizierungsfeld 7 für ein virtuelles lokales Netzwerk (virtual local area network, VLAN) an, welches die Länge von vier Bytes aufweist. Diesem Identifizierungsfeld 7 ist in zeitlich fortschreitender Reihenfolge gemäß dem Pfeil t in der Figur ein sogenanntes Ethertype-Feld 8 aus zwei Bytes nachgeordnet. Das Ethertype-Feld 8 enthält eine Information über das Format der Daten innerhalb des nachfolgenden Datenfelds 9, wobei in dem Datenfeld 9 bis zu 1500 Bytes Daten enthalten sein können. Ferner kann ein sogenanntes PAD-Feld (nicht dargestellt) vorgesehen sein, welches in der Regel verwendet wird, um einen Ethernet-Frame 1 auf eine zur Übertragung erforderliche Minimalgröße von 64 Bytes zu bringen.

Das Ende des Ethernet-Frame 1 bildet eine Rahmenüberprüfungs-Sequenz 10, welche eine 32-Bit-CRC-Prüfsumme (4 Byte) darstellt, die über den Rahmen beginnend vom Zieladressfeld 5 bis einschließlich zum PAD-Feld berechnet wird. Die Präambel 4, das Rahmenanfangs-Begrenzungssymbol 3 und die Rahmenüberprüfungs-Sequenz 10 selbst sind nicht in der Rahmenüberprüfungs-Sequenz 10 berücksichtigt.

Eine Identifizierung bzw. Unterscheidung des jeweiligen Formats der Daten innerhalb des Ethernet-Frame 1 bzw. des Datenfeldes 9 kann bei den bisher üblichen Übertragungsverfahren erst nach dem Einlesen des Ethertype-Feldes 8 erfolgen.

Erfindungsgemäß wird dadurch, dass die der Identifizierung des jeweiligen Formats der Daten innerhalb eines Ethernet-Frame 1 dienende Information bereits beim Einlesen der Präambel 4 erhältlich ist, somit ein Zeitvorteil 11 erreicht. Dieser entspricht der zum Einlesen der der Präambel 4 nachfolgenden Felder 3 bis 8 erforderlichen Zeit.

Gemäß der Erfindung wird die zusätzliche Steuerinformation zur schnelleren Unterscheidung der jeweiligen Formate der Daten innerhalb eines Ethernet-Frame 1 besonders bevorzugt derart in die Präambel 4 eingefügt, dass dazu ein bisher ungenutztes Code- bzw. Steuerwort des 8B/10B-Code genutzt wird, welches zuvor entsprechend umdefiniert wurde. Bei der Serialisierung/Deserialisierung im Zusammenhang mit dem Leitungscode 8B/10B wird somit jeweils ein bisher ungenutztes Code- bzw. Steuerwort des 8B/10B-Code genutzt, welches zuvor entsprechend umdefiniert wurde, beispielsweise "K28.0" für die Steuerinformation "IT-Standard-Daten", "K28.2" für die Steuerinformation "IT-Standard-Daten" und K28.3" für die Steuerinformation "Diagnose-Daten".

## Patentansprüche

1. Verfahren zum Übertragen von Daten mittels eines Datenrahmens (1) in einem Kommunikationsnetz von wenigstens einem an das Kommunikationsnetz angeschlossenen Teilnehmer an wenigstens einen weiteren ebenfalls an das Kommunikationsnetz angeschlossenen Teilnehmer,
**dadurch gekennzeichnet, dass**
die Daten für eine Übertragung derart aufbereitet werden, dass eine der Identifizierung bzw. Unterscheidung des jeweiligen Formats der Daten innerhalb eines Datenrahmens (1) dienende Information in ein Feld unmittelbar am Anfang (4) eines Datenrahmens (1) bzw. in ein einen Datenrahmen (1) einleitendes Feld (4) eingefügt wird.

2. Verfahren nach Anspruch 1, **dadurch gekennzeichnet, dass** die der Identifizierung bzw. Unterscheidung des jeweiligen Formats der Daten innerhalb eines Datenrahmens (1) dienende Information bereits in einem anderen Feld (8) des Datenrahmens (1) als dem unmittelbar am Anfang eines Datenrahmens (1) liegenden bzw. dem einen Datenrahmen (1) einleitenden Feld (4) enthalten ist.

3. Verfahren nach Anspruch 1 oder 2, **dadurch gekennzeichnet, dass**
das Kommunikationsnetz gemäß dem Ethernet-Standard ausgeführt und entsprechend der Datenrahmen (1) die Form eines Ethernet-Frame (1) aufweist.

4. Verfahren nach einem der Ansprüche 1 bis 3, **dadurch gekennzeichnet, dass**
das Feld (4) unmittelbar am Anfang eines Datenrahmens (1) bzw. das einen Datenrahmen (1) einleitende Feld (4) die Position und Form einer als Präambel (4) nutzbaren oder dienenden Bitfolge aufweist.

5. Verfahren nach einem der Ansprüche 1 bis 4, **dadurch gekennzeichnet, dass**
wenigstens ein Teil des Inhalts des Feldes (4) unmittelbar am Anfang eines Datenrahmens (1) bzw. des einen Datenrahmen (1) einleitenden Feldes (4) durch eine der Identifizierung bzw. Unterscheidung des jeweiligen Formats der Daten innerhalb eines Datenrahmens (1) dienende Information ersetzt wird.

6. Verfahren nach einem der Ansprüche 1 bis 5, **dadurch gekennzeichnet, dass**
die Information derart eingefügt wird, dass bei der Serialisierung/Deserialisierung wenigstens ein bisher ungenutztes Code- bzw. Steuerwort des jeweils verwendeten Leitungscode genutzt wird, welches zuvor entsprechend umdefiniert wurde.

7. Verfahren nach Anspruch 6, **dadurch gekennzeichnet, dass** als Leitungscode der 8B/10B-Code genutzt wird.

8. Verfahren nach Anspruch 7, **dadurch gekennzeichnet, dass** wenigstens eines der bisher ungenutzten Code- bzw. Steuerwörter "K28.0", "K28.2" bzw. "K28.3" umdefiniert wird, so dass es der Information "IT-Standard-Daten", "I/O-Daten" bzw. "Diagnose-Daten" entspricht.

9. Sendevorrichtung zum Senden von Daten mittels eines Datenrahmens (1) in einem Kommunikationsnetz von wenigstens einem an das Kommunikationsnetz angeschlossenen Teilnehmer an wenigstens einen weiteren ebenfalls an das Kommunikationsnetz angeschlossenen Teilnehmer, insbesondere ausgebildet zum Einsatz bei einem Verfahren gemäß einem der vorstehenden Ansprüche,
**dadurch gekennzeichnet, dass**
die Sendevorrichtung ausgebildet ist, eine der Identifizierung bzw. Unterscheidung des jeweiligen Formats der Daten innerhalb eines Datenrahmens (1) dienende Information in ein Feld unmittelbar am Anfang (4) eines Datenrahmens (1) bzw. in ein einen Datenrahmen (1) einleitendes Feld (4) einzufügen.

10. Empfangsvorrichtung zum Empfangen von mittels eines Datenrahmens (1) in einem Kommunikationsnetz von wenigstens einem an das Kommunikationsnetz angeschlossenen Teilnehmer gesendeter Daten, insbesondere ausgebildet zum Einsatz bei einem Verfahren gemäß einem der Ansprüche 1 bis 8, **dadurch gekennzeichnet, dass**
die Empfangsvorrichtung ausgebildet ist, die verschiedenen Formate der Daten innerhalb eines Datenrahmens (1) anhand einer der Identifizierung bzw. Unterscheidung des jeweiligen Datenformats dienenden Information, die in einem Feld unmittelbar am Anfang (4) eines Datenrahmens (1) bzw. in einem einen Datenrahmen (1) einleitenden Feld (4) enthalten ist, zu erkennen bzw. zu unterscheiden.

11. Kommunikationssystem, gebildet aus wenigstens einer Sendevorrichtung gemäß Anspruch 9 und wenigstens einer Empfangsvorrichtung gemäß Anspruch 10.
